# EUROPEAN PATENT SPECIFICATION

(11) **EP 3 210 743 B1**
(45) Date of publication and mention of the grant of the patent: **06.10.2021**
(21) Application number: 17156046.9
(22) Date of filing: 14.02.2017
(51) Int. Cl.: B29C 45/16, B29C 45/14

(54) **INJECTION MOLDED PART WITH INSERT FILM**
SPRITZGUSSTEIL MIT EINSATZFOLIE
PIÈCE MOULÉE PAR INJECTION AYANT UN FILM D'INSERTION

(30) Priority: 24.02.2016 US 201615052053
(43) Date of publication of application: 30.08.2017
(73) Proprietor: DUS Operating, Inc., Auburn Hills, MI 48326 (US)
(72) Inventor: MORALES, Alberto Polonio, West Bloomfield, MI 48322 (US); HER, Sai, Warren, MI 48091 (US)
(74) Representative: btb IP Bungartz Baltzer Partnerschaft mbB Patentanwälte

(56) References cited:
- EP-A1- 3 088 156
- DE-A1- 4 124 297
- DE-A1- 4 301 444
- DE-A1-102010 020 039
- JP-B2- 3 406 731
- US-A1- 2014 242 378

## Description

### FIELD

The invention relates generally to an injection molded part for a motor vehicle according to the preamble of claim 1, and more particularly to an injection molded part for a motor vehicle having an inserted film layer camouflaged along the perimeter.

### BACKGROUND

A typical motor vehicle has numerous injection molded parts, ranging from large body panels to decorative interior trim. These parts are formed by forcing or injecting a viscous material, such as a thermoplastic or thermosetting polymer, into a mold or cavity having the desired shape of the part. Thermoplastics are generally injected under elevated temperatures while thermosets are generally comprised of two different chemical components that crosslink and cure within the mold. The mold itself may take any number of shapes and forms and have multiple cavities.

Machined components, insert molding films, or other premolded components may be inserted into the mold to allow the material injected into the mold to solidify around the component to create the injection molded parts. Additional materials, such as clear coatings, may then be molded onto the part in subsequent injection molding operations. The insert molding operation is especially useful in creating decorative interior trim parts that have attractive designs, high quality surface finishes, depth of image, and distinctness.

However, the dimensions and complexity of the injection molded part are limited by the inclusion of the insert film layer or decorative layer. These film layers are heat treated to curve or bend the film before placement in the mold. However, the film is limited in depth, measured from a top of the film to the bent edges, to approximately 10mm. Thus, in order to hide the transition of the film to the injected material, the injection molded part is limited in depth to the edge of the film. While these injection molded parts are useful for their intended purpose, there is a need in the art for more complex injection molded part designs that are not limited to the depth of the film and which have desirable aesthetic and design features.

An injection molded part as mentioned above is disclosed in EP 3 088 156 A1, wherein a process for the manufacture of an illuminated mounting part and such a part for the use in connection with a motor vehicles is described. This part comprises a translucent film layer a first side covered at least partly by a mask layer, which is opaque to at least a translucent range. On the opposite side the film layer is sealed by an injection molded polymer layer comprising a translucent area which can be illuminated by a lightning device located behind the polymer layer opposite to the film layer.

US 2014/0242378 A1 shows a polymer sealed in-mold decoration with a decoration layer which is sealed on both sides by inner and outer layers.

A system for manufacturing a decorative injection molded part is known from JP 3 406 731 B2 wherein the outer edges of a decorative layer is sealed and covered by an adjacent layer wherein a sheet main body portion of the adjacent layer is molded integrally as to encapsulate the edges of the decorative layer.

DE 43 01 444 A1 discloses a method for the production of three-dimensional parts wherein a support layer is injection molded at one side of a supporting central layer and then a decorative layer is applied to the opposite side of the central layer.

The drawback of the known injection molded parts is that either the edges of the film layer are not sufficiently secured and sealed or the film layer is not visible after the second polymer layer has been applied. It is thus the object of the invention to provide an injection molded part which can be easily and cost-saving produced and which allows a reliable sealing of the film layer whereas the outer surface of the film layer is still visible. The object is solved according to the invention by means of an injection molding part according to claim 1.

### SUMMARY

The new injection molded part includes a film layer having a film main portion and a film first side portion that ends in a first film side surface, wherein the film first side portion extends from the film main portion in a direction different than a plane defined by the film main portion. The film layer also includes a film outer surface and a film inner surface disposed opposite the film outer surface. A first polymer layer is in contact with the film inner surface. A second polymer layer is in contact with the film outer surface, the film first side surface, and the first polymer layer.

In one aspect of the injection molded part, the first polymer layer includes a first side surface which extends past the film first side surface.

In another aspect of the injection molded part, a distance between the first side surface of the first polymer layer and the film outer surface is greater than 11 mm.

In another aspect of the injection molded part, the film layer includes a film second side portion extending from the film main portion in a direction different than the plane defined by the film main portion, wherein the film second side portion ends in a film second side surface. Preferably, the film main portion is convex.

In another aspect of the injection molded part, the first polymer layer includes a first transition region disposed between the film main portion and the first side portion.

In another aspect of the injection molded part, the first transition region has an arcuate profile.

In another aspect of the injection molded part, the film first side surface is substantially disposed at a midpoint of the first transition region.

In another aspect of the injection molded part, the first polymer layer is one of a polycarbonate, a polypropylene, and a nylon.

In another aspect of the injection molded part, the film layer includes a printed graphic. Preferably, the film layer also includes a translucent portion.

In another aspect of the injection molded part, the printed graphic is disposed above the film main portion of the first polymer layer.

In another aspect of the injection molded part, the second polymer layer is a clear polycarbonate.

In another aspect of the injection molded part, the second polymer layer is in contact with the first side portion of the first polymer layer.

In another aspect of the injection molded part, a top surface of the first polymer layer is flush with the film outer surface.

A component for a motor vehicle is also provided. The component includes a substrate having a substrate top surface, a substrate first side surface, and a substrate second side surface, a transparent coating, and a film sandwiched between the substrate and the transparent coating, wherein the film has a film main portion, a first side portion and a second side portion non-coplanar to the film main portion, a film top surface, a film first side surface, and a film second side surface. A depth of the film measured from the film first side surface to a center of the film top surface is less than a depth of the substrate measured from the substrate first side surface to a center of the substrate top surface.

In one aspect of the component, the depth of the film measured from the film first side surface to a center of the film top surface is less than 10mm and the depth of the substrate measured from the substrate first side surface to a center of the substrate top surface is greater than 11mm.

In another aspect of the component, the substrate includes a center portion, a first side portion, and a first curved portion disposed between the center portion and the first side portion, and the film first side surface is substantially perpendicular to a tangent of the first side portion of the substrate.

In another aspect of the component, the transparent coating is in contact with the film top surface and the substrate top surface.

In another aspect of the component, the film and the substrate are substantially the same color.

In another aspect of the component, the substrate defines a step in contact with the film first side surface.

In another aspect of the component, the step includes a first surface perpendicular to a second surface.

In a preferred embodiment of the invention a component for a motor vehicle comprises a substrate having a substrate top surface, a substrate center portion, a substrate side portion, and a substrate transition region that transitions the substrate center portion to the substrate side portion, and further comprises a film disposed on the substrate, wherein the film has a film top surface, a film bottom surface in contact with the substrate top surface, a film first side surface, and a film second side surface; and further comprises a transparent coating having a coating inner surface, a coating center portion, a coating side portion, and a coating transition region that transitions the coating center portion to the coating side portion, wherein the coating inner surface is in contact with the film top surface, the film first side surface, and the film second side surface and the coating inner surface is in contact with the substrate top surface at the coating side portion and substrate side portion.

Further aspects, examples, and advantages will become apparent by reference to the following description and appended drawings wherein like reference numbers refer to the same component, element or feature.

### DRAWINGS

The drawings described herein are for illustration purposes only and are not intended to limit the scope of the present disclosure in any way.
FIG. 1 is a top perspective view of an example of an injection molded part;
FIG. 2 is an exploded, top perspective view of the injection molded part shown in FIG. 1;
FIG. 3 is a cross-section view of the injection molded part viewed in the direction of arrows 3-3 in FIG. 1;
FIG. 3A is an exploded, cross-section view of a portion of the injection molded part shown in FIG. 3;
FIG. 3B is an exploded, cross-section view of a portion of the injection molded part shown in FIG. 3; and
FIG. 4 is a cross-section view of another example of an injection molded part.

### DETAILED DESCRIPTION

The following description is merely exemplary in nature and is not intended to limit the present disclosure, application, or uses.

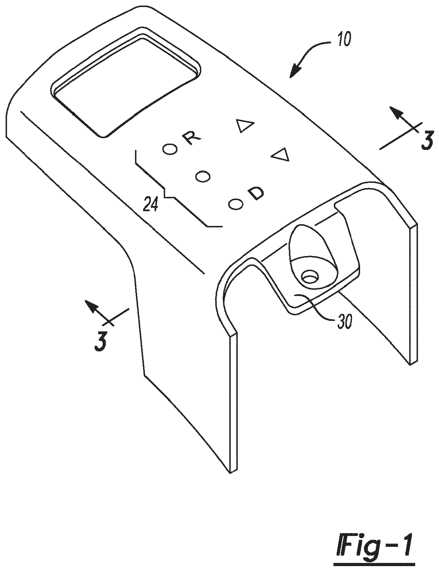

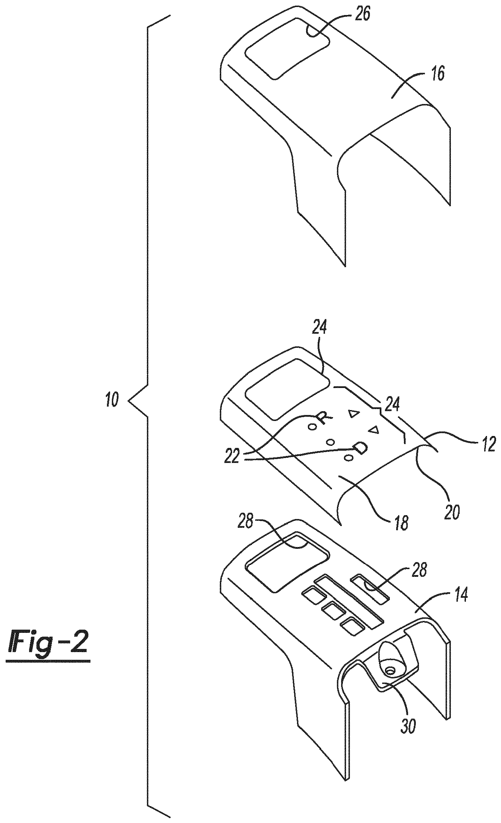

With reference to FIGS. 1 and 2, an injection molded part 10 according to the principles of the present invention is generally indicated by reference number 10. The injection molded part 10 is illustrated, in the example provided, as an interior shifter trim part for use with a motor vehicle. However, it should be appreciated that the injection molded part 10 may take various other forms without departing from the scope of the present invention. Other examples include console trim parts, gauge trim parts, panels, shifter knobs, armrests or any other part that requires an insert film.

The injection molded part 10 generally includes a film layer 12 or a foil 112 sandwiched between a first polymer layer 14 or a substrate and a second polymer layer 16 or a coating. The film layer 12 includes a film outer surface 18 or a top surface and a film inner surface 20 or a bottom surface. The film layer 12 is used to provide information or decoration to the injection molded part 10. For example, the film outer surface 18 may include a printed graphic 22 or any other decorative or informational markings and is generally opaque to match the color of the first polymer layer 14. However, in the example provided, the film layer 12 also includes translucent portions 24. The film layer 12 is inserted into a mold (not shown) and the second polymer layer 16 is injected into the mold onto the top surface, the film outer surface 18 of the film layer 12. The coating protects and covers the film layer 12. The second polymer layer 16 is preferably a clear, transparent coating of polycarbonate, though various other materials may be employed. The second polymer layer 16 may be formed to have any particular shape and to define particular features, for example a window 26. Next, using a second mold (not shown), the first polymer layer 14 is injected into the mold onto the bottom surface, the film inner surface 20 of the film layer 12. The first polymer layer 14 is preferably made of polycarbonate, polypropylene, or nylon, though various other materials may be employed. The first polymer layer 14 provides strength to the injection molded part 10 and performs a fastening function. Like the second polymer layer 16, the first polymer layer 14 may be formed to have any particular shape to define particular features, for example windows 28, an attachment bracket 30, etc. The windows 28 preferably align with translucent portions 24 of the film layer 12 to allow illumination to be seen through the first polymer layer 24 and the film layer 12.

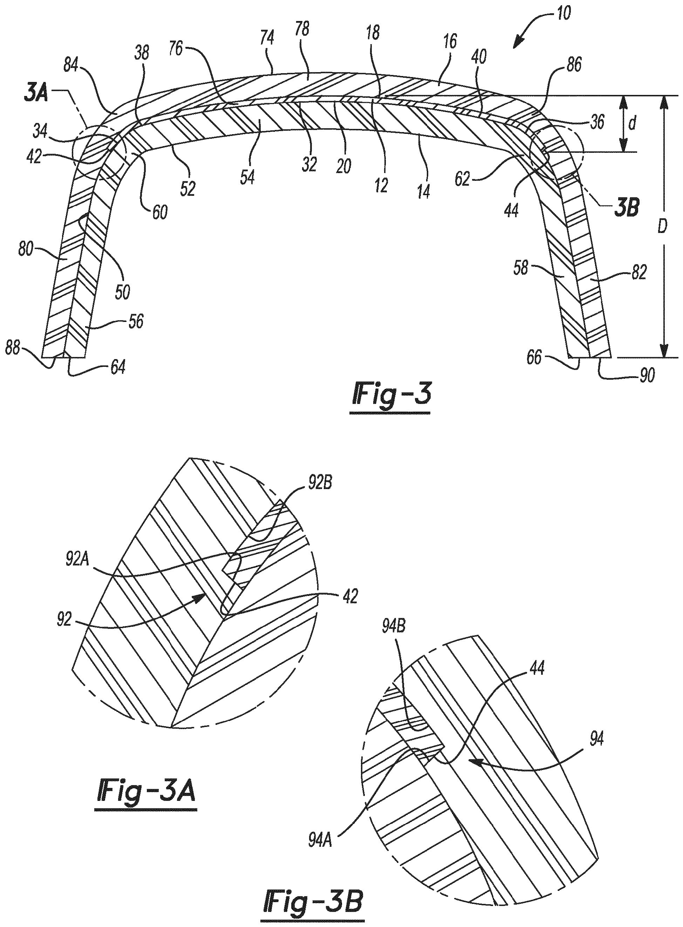

Turning to FIG. 3, the film layer 12, the first polymer layer 14, and the second polymer layer 16 are shown in greater detail. The film layer 12 includes a film main portion 32 with a film first side portion 34 and a second side portion 36 disposed opposite the film first side portion 34. The film main portion 32 defines a substantially curved or convex surface. The film first side portion 34 and the film second side portion 36 extend from the film main portion 32. The film main portion 32 transitions to the first side portion 34 via a first transition region 38. Likewise, the film main portion 32 transitions to the film second side portion 36 via a second transition region 40. The film first side portion 34 ends at a film first side surface 42 while the film second side portion 36 ends at a film second side surface 44. It should be appreciated that the first transition region 38 and the second transition region 40 may be angled, rather than curved, without departing from the scope of the present example. The film first side surface 42 and the film second side surface 44 are canted outwardly from the film main portion 32. A depth d of the film layer 12 is defined as a distance from the film outer surface 18 to one of the surface, the film first side surface 42 or the film second side surface 44, as measured perpendicular to a plane of the film main portion 32, and is indicated by reference letter "d". The depth d of the film layer 12 is less than 10mm.

As noted above, the first polymer layer 14 is disposed on the film inner surface 20 of the film layer 12. The first polymer layer 14 completely covers the film inner surface 20 of the film layer 12. The first polymer layer 14 includes an outer surface 50 that contacts the film layer 12 and the second polymer layer 16 and an inner surface 52. The first polymer layer 14 also includes a main portion 54, a first side portion 56 and a second side portion 58 disposed opposite the first side portion 56. The main portion 54 defines a curved or convex surface. The first side portion 56 and the second side portion 58 extend from the main portion 54 of the first polymer layer 14. The main portion 54 transitions to the first side portion 56 via a first transition region 60. Likewise, the main portion 54 transitions to the second side portion 58 via a second transition region 62. The first side portion 56 ends at a first side surface 64 while the second side portion 58 ends at a second side surface 66. It should be appreciated that the first and second transition regions 60, 62 may be angled, rather than curved, without departing from the scope of the present example, and will generally conform to the shape of the inner surface 20 of the film layer 12. The first side surface 64 and the second side surface 66 are canted outwardly from the main portion 54.

A depth D of the injection molded part 10 is defined as a distance from the film outer surface 18 of the film layer 12 to one of the surface, the first side surface 64 or the second side surface 66 of the first polymer layer 14, as measured perpendicular to a plane of the film main portion 32 of the film layer 12, and is indicated by reference letter "D". The depth D of the injection molded part 10 is greater than the depth d of the film layer 12, i.e., greater than approximately 11 mm. Thus, the first side surface 64 and the second side surface 66 may extend past the film first side surface 42 and the second film side surface 44 of the film layer 12. To camouflage the transition from the film layer 12 to the first polymer layer 14, the film layer 12 and the first polymer layer 14 are substantially of the same color. In addition, the film first surface 42 and the film second side surface 44 of the film layer 12 are preferably disposed at the midpoint of the first transition region 60 and the second transition region 62 of the first polymer layer 14, respectively.

The second polymer layer 16 is disposed overtop the film outer surface 18 of the film layer 12 and overtop the exposed outer surface 50 of the first polymer layer 14 and the exposed the film first surface 42 and the film second side surface 44 of the film layer 12, thus encapsulating the film layer 12. The second polymer layer 16 includes an outer surface 74 and an inner surface 76 that contacts the film layer 12 and the first polymer layer 14. The second polymer layer 16 also includes a main portion 78, a first side portion 80 and a second side portion 82 disposed opposite the first side portion 80. The main portion 78 defines a substantially curved or convex surface. The first side portion 80 and the second side portion 82 extend from the main portion 78. In the example provided, the second polymer layer 16 generally conforms to the cross-section shape of the film layer 12 and the first polymer layer 14. In a preferred embodiment, the film layer 12 is inset into the second polymer layer 16 such that a thickness of the part 10 is constant throughout. Thus, the second polymer layer 16 has substantially the same thickness as that of the first polymer layer 14 in areas without the film layer 12.

The main portion 78 transitions to the first side portion 82 via a first transition region 84. Likewise, the main portion 78 transitions to the second side portion 82 via a second transition region 86. The first side portion 80 ends at a first side surface 88 while the second side portion 82 ends at a second side surface 90. It should be appreciated that the first transition region 84 and the second transition region 86 may be angled, rather than curved, without departing from the scope of the present example, and will generally conform to the shape of the film outer surface 18 of the film layer 12 and the film outer surface 50 of the first polymer layer 14. The first surface 88 and the second side surface 90 of the second polymer layer 16 may be coplanar with the first side surface 64 and the second side surface 66 of the first polymer layer 14.

Since the second polymer layer 16 is injection molded onto the outer surface 18 of the film layer 12, a first step 92 or ledge and a second step 94 or ledge are formed in the inner surface 76 of the second polymer layer 16, as best seen in FIGS. 3A and 3B. The first step 92 includes a first surface 92A perpendicular to a second surface 92B. The second step 94 includes a first surface 94A perpendicular to a second surface 94B. The first step 92 contacts the film first end surface 42 of the film layer 12 and the second step 94 contacts the film second end surface 44 of the film layer 12.

As is shown by the preceding description, the injection molded part 10 camouflages the transition between the film layer 12 and the first polymer layer 14 at the film first side surface 42 and the film second side surface 44. By camouflaging the film first side surface 42 and the film second side surface 44 of the film layer 12, the injection molded part 10 may have a depth D much greater than the depth d of the film layer 12 without sacrificing the quality of the appearance as viewed through the transparent second polymer layer 16.

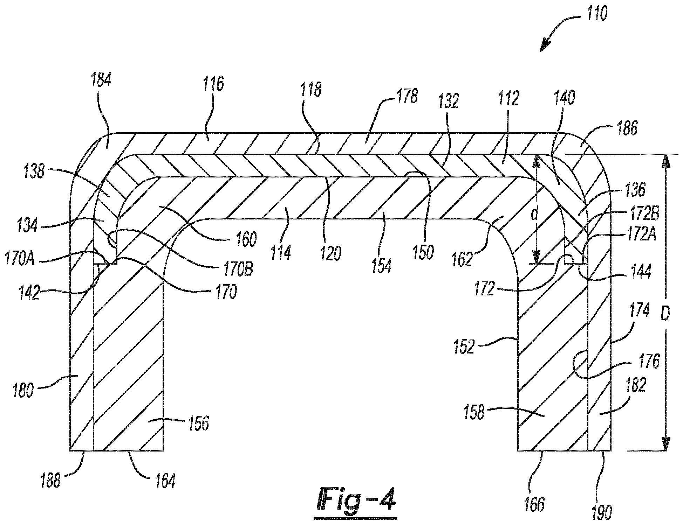

Turning to FIG. 4, an alternate injection molded part 110 is generally indicated by reference number 110. The injection molded part 110 generally includes a foil as film layer 112 sandwiched between a substrate as first polymer layer 114 and a coating as second polymer layer 116, as described above in relation to the injection molded part 10.

The film layer 112 includes a top or outer surface 118 and a bottom or inner surface 120. The film layer 112 also includes a film main portion 132 with a film first side portion 134 and a film second side portion 136 disposed opposite the film first side portion 134. The main portion 132 defines a substantially planar surface. The film first side portion 134 and the film second side portion 136 extend from the film main portion 132 at an angle with respect to the planar surface of the film main portion 132 such that the film first portion 134 and the film second side portion 136 do not lie upon the same plane as the film main portion 132. Thus, in the example provided, the film layer 112 has a substantially "n" shaped cross-section. The film main portion 132 transitions to the film first side portion 134 via a first curved portion 138. Likewise, the film main portion 132 transitions to the film second side portion 136 via a second curved portion 140. The film first side portion 134 ends at a film first side surface 142 while the film second side portion 136 ends at a film second side surface 144. It should be appreciated that the first corved portion 138 and the second curved portion 140 may be angled, rather than curved, without departing from the scope of the present example. The film first side surface 142 is parallel, and preferably coplanar, to the film second side surface 144. A depth d of the film layer 112 is defined as a distance from the outer surface 118 to one of the film first side surface 132 or the film second side surface 144, as measured perpendicular to the plane of the film main portion 132, and is indicated by reference letter "d". The depth d of the film layer 112 is less than 10mm.

As noted above, the first polymer layer 114 is disposed on the inner surface 120 of the film layer 112. The first polymer layer 114 completely covers the inner surface 120 and the film first surface 142 and the film second side surface 144, thus partially encapsulating the film layer 112. The first polymer layer 114 includes an outer surface 150 that contacts the film layer 112 and the coating 116 and an inner surface 152. The first polymer layer 114 also includes a main portion 154, a first side portion 156 and a second side portion 158 disposed opposite the first side portion 156. The main portion 154 defines a substantially planar surface. The first side portion 156 and the second side portion 158 extend from the main portion 154 at an angle with respect to the planar surface of the main portion 154 such that the first side portion 156 and the second side portion 158 do not lie upon the same plane as the main portion 154. Thus, in the example provided, the first polymer layer 114 has a substantially "n" shaped cross-section. The main portion 154 transitions to the first side portion 156 via a first curved portion 160. Likewise, the main portion 154 transitions to the second side portion 158 via a second curved portion 162. The first side portion 156 ends at a first side surface 164 while the second side portion 158 ends at a second side surface 166. It should be appreciated that the first curved portion 160 and the second curved portion 162 may be angled, rather than curved, without departing from the scope of the present example, and will generally conform to the shape of the inner surface 120 of the film layer 112. The first side surface 164 is parallel, and preferably coplanar, to the second side surface 166. The first side portion 156 and the second side portion 158 of the first polymer layer 114 are coplanar to the film first side portion 134 and the film second side portion 136 of the film layer 112.

Since the first polymer layer 114 is injection molded onto the inner surface 120 of the film layer 112, a first step 170 or ledge and a second step 172 or ledge are formed in the outer surface 150 of the substrate 114. The first step 170 includes a first surface 170A perpendicular to a second surface 170B. The second step 172 includes a first surface 172A perpendicular to a second surface 172B. The first step 170 contacts the first end surface 142 of the film layer 112 and the second step 172 contacts the second end surface 144 of the film layer 112.

A depth D of the injection molded part 110 is defined as a distance from the outer surface 118 of the film layer 112 to one of the first side surface 164 or the second side surface 166 of the first polymer layer 114, as measured perpendicular to the plane of the film main portion 132 of the film layer 112, and is indicated by reference letter "D". The depth D of the injection molded part 110 is greater than the depth d of the film layer 112, i.e., greater than approximately 11 mm. Thus, the first side surface 164 and second side surface 166 may extend past the film first side surface 142 and the film second sides surface 144 of the film layer 112. To camouflage the transition from the film layer 112 to the first polymer layer 114, the film layer 112 and the first polymer layer 114 are substantially of the same color. In addition, the film first side surface 142 and the film second side surface 144 of the film layer 112 are preferably disposed perpendicular to the tangent of the first side portion 156 and the second side portion 158 of the first polymer layer 114. Thus the film first side surface 142 and the film second side surface 144 are disposed below a midpoint of the first curved portion 160 and the second curved portion 162 of the first polymer layer 114.

The coating 116 is disposed overtop the film outer surface 118 of the film layer 112 and overtop the exposed outer surface 150 of the first polymer layer 114. The coating 116 includes an outer surface 174 an inner surface 176 that contacts the film layer 112 and the first polymer layer 114. The coating 116 also includes a main portion 178, a first side portion 180 and a second side portion 182 disposed opposite the first side portion 180. The main portion 178 defines a substantially planar surface. The first side portion 180 and the second side portion 182 extend from the main portion 178 at an angle with respect to the planar surface of the main portion 178 such that the first side portion 180 and the second side portion 182 do not lie upon the same plane as the main portion 178. Thus, in the example provided, the coating 116 conforms to the generally cross-section shape of the film layer 112 and the first polymer layer 114 and has a constant thickness throughout.

The main portion 178 transitions to the first side portion 182 via a first curved portion 184. Likewise, the main portion 178 transitions to the second side portion 182 via a second curved portion 186. The first side portion 180 ends at a first side surface 188 while the second side portion 182 ends at a second side surface 190. It should be appreciated that the first curved portion 184 and second curved portion 186 may be angled, rather than curved, without departing from the scope of the present example, and will generally conform to the shape of the outer surface 118 of the film layer 112 and the outer surface 150 of the first polymer layer 114. The first side surface 188 is parallel, and preferably coplanar, to the second side surface 190. The first side surface 188 and the second side surface 190 of the coating 116 are also preferably coplanar with the first side surface 164 and the second side surface 166 of the first polymer layer114.

As is shown by the preceding description, the injection molded part 110 camouflages the transition between the film layer 112 and the first polymer layer 114at the first side surface 142 and the second side surface 144. By camouflaging the film first side surface 142 and the film second side surface 144 of the film layer 112, the injection molded part 110 may have a depth D much greater than the depth d of the film layer 112 without sacrificing the quality of the appearance as viewed through the transparent coating 116.

## Claims

1. An injection molded part (10, 110) for a motor vehicle comprising:
• a film layer (12, 112) having a film main portion (32, 132) and a film first side portion (34, 134) that ends in a first film side surface (42, 142), wherein the film first side portion (34, 134) extends from the film main portion (32, 132) in a direction different than a plane defined by the film main portion (32, 132), the film layer (12, 112) also having a film outer surface (18, 118) and a film inner surface (20, 120) disposed opposite the film outer surface (18, 118);
• a first polymer layer (14, 114) in contact with the film inner surface (20, 120); and
• a second polymer layer (16) or a coating (116) in contact with the film outer surface (18, 118), the film first side surface (42, 142) and the first polymer layer (14, 114); wherein
• the second polymer layer (16) or the coating (116) is a transparent polymer; **characterized in, that**
the first polymer layer (14, 114) includes a first side surface (64, 164) which extends past the film first side surface (42, 142); wherein
a depth (d) of the film layer (12, 112) measured from the film first side surface (42, 142) to a center of the film top surface (18, 118) is less than a depth (D) of the first polymer layer (14, 114) measured from the first side surface (64, 164) to a center of the top surface (50, 150); wherein the film layer (12, 112) includes a film second side portion (36, 136) extending from the main portion (32, 132) in a direction different than the plane defined by the film main portion (32, 132), wherein the film second side portion (36, 136) ends in a film second side surface (44, 144) and wherein the film layer (12, 112) and the first polymer (14, 114) are substantially the same color.

2. The injection molded part (10, 110) of claim 1 wherein the first polymer layer (14, 114) includes a first transition region (60, 160) disposed between the main portion (54, 154) and the first side portion (56, 156).

3. The injection molded part (10, 110) of claim 3 wherein the first transition region (60, 160) has an arcuate profile and the film first side surface (42, 142) is disposed substantially at a midpoint of the first transition region (60, 160) of the first polymer layer (14, 114).

4. The injection molded part (10, 110) of any of the preceding claims wherein the film layer (12, 112) is inset into the second polymer layer (16) or the coating (116).

5. The injection molded part (10, 110) of any of the preceding claims wherein the film layer (12, 112) includes a printed graphic (22) and a translucent portion (24).

6. The injection molded part (10, 110) of claim 5 wherein the printed graphic (22) is disposed above the main portion (54, 154) of the first polymer layer (14, 114).

7. The injection molded part (10, 110) of any of the preceding claims wherein the second polymer layer (16) or the coating (116) is in contact with the first side portion (56, 156) of the first polymer layer (14, 114).

8. The injection molded part (10, 110) of any of the preceding claims wherein a top surface (50, 150) of the first polymer layer (14, 114) is flush with the film outer surface (18, 118).

9. The injection molded part (10, 110) of claim 4, wherein the first polymer layer (14, 114) includes a center portion (54, 154), a first side portion (56, 156), and a first curved portion (60, 160) disposed between the center portion (54, 154) and the first side portion (56, 156), and the film first side surface (42, 142) is substantially perpendicular to a tangent of the first side portion (56, 156) of the substrate (14, 114).

## Patentansprüche

1. Spritzgussteil (10, 110) für ein Kraftfahrzeug, umfassend:
• eine Folienschicht (12, 112) mit einem Folienhauptabschnitt (32, 132) und einem ersten Folienseitenabschnitt (34, 134), der in einer ersten Folienseitenfläche (42, 142) endet, wobei sich der erste Folienseitenabschnitt (34, 134) von dem Folienhauptabschnitt (32, 132) in einer Richtung erstreckt, die sich von einer durch den Folienhauptabschnitt (32, 132) definierten Ebene unterscheidet, wobei die Folienschicht (12, 112) auch eine Folienaußenfläche (18, 118) und eine gegenüber der Folienaußenfläche (18, 118) angeordnete Folieninnenfläche (20, 120) aufweist;
• eine erste Polymerschicht (14, 114) in Kontakt mit der Folieninnenfläche (20, 120); und
• eine zweite Polymerschicht (16) oder eine Beschichtung (116) in Kontakt mit der Folienaußenfläche (18, 118), der ersten Folienseitenfläche (42, 142) und der ersten Polymerschicht (14, 114); wobei
• die zweite Polymerschicht (16) oder die Beschichtung (116) ein transparentes Polymer ist; **dadurch gekennzeichnet, dass**
die erste Polymerschicht (14, 114) eine erste Seitenfläche (64, 164) aufweist, die sich über die erste Folienseitenfläche (42, 142) hinaus erstreckt; wobei
eine Tiefe (d) der Folienschicht (12, 112), gemessen von der ersten Folienseitenfläche (42, 142) zu einer Mitte der Folienaußenfläche (18, 118), geringer ist als eine Tiefe (D) der ersten Polymerschicht (14, 114), gemessen von der ersten Seitenfläche (64, 164) zu einer Mitte der oberen Fläche (50, 150); wobei die Folienschicht (12, 112) einen zweiten Folienseitenabschnitt (36, 136) aufweist, der sich von dem Hauptabschnitt (32, 132) in einer Richtung erstreckt, die sich von der durch den Folienhauptabschnitt (32, 132) definierten Ebene unterscheidet, wobei der zweite Folienseitenabschnitt (36, 136) in einer zweiten Folienseitenfläche (44, 144) endet und wobei die Folienschicht (12, 112) und das erste Polymer (14, 114) im Wesentlichen die gleiche Farbe aufweisen.

2. Spritzgussteil (10, 110) nach Anspruch 1, wobei die erste Polymerschicht (14, 114) einen ersten Übergangsbereich (60, 160) aufweist, der zwischen dem Hauptabschnitt (54, 154) und dem ersten Seitenabschnitt (56, 156) angeordnet ist.

3. Spritzgussteil (10, 110) nach Anspruch 3, wobei der erste Übergangsbereich (60, 160) ein bogenförmiges Profil aufweist und die Folienseitenfläche (42, 142) im Wesentlichen in der Mitte des ersten Übergangsbereichs (60, 160) der ersten Polymerschicht (14, 114) angeordnet ist.

4. Spritzgussteil (10, 110) nach einem der vorhergehenden Ansprüche, wobei die Folienschicht (12, 112) in die zweite Polymerschicht (16) oder die Beschichtung (116) eingelegt ist.

5. Spritzgussteil (10, 110) nach einem der vorhergehenden Ansprüche, wobei die Folienschicht (12, 112) eine gedruckte Grafik (22) und einen transluzenten Abschnitt (24) enthält.

6. Spritzgussteil (10, 110) nach Anspruch 5, wobei die gedruckte Grafik (22) oberhalb des Hauptteils (54, 154) der ersten Polymerschicht (14, 114) angeordnet ist.

7. Spritzgussteil (10, 110) nach einem der vorhergehenden Ansprüche, wobei die zweite Polymerschicht (16) oder die Beschichtung (116) mit dem ersten Seitenabschnitt (56, 156) der ersten Polymerschicht (14, 114) in Kontakt ist.

8. Spritzgussteil (10, 110) nach einem der vorhergehenden Ansprüche, bei dem eine obere Fläche (50, 150) der ersten Polymerschicht (14, 114) mit der Folienaußenfläche (18, 118) bündig ist.

9. Spritzgussteil (10, 110) nach Anspruch 4, wobei die erste Polymerschicht (14, 114) einen Mittelabschnitt (54, 154), einen ersten Seitenabschnitt (56, 156) und einen ersten gekrümmten Abschnitt (60, 160) aufweist, der zwischen dem Mittelabschnitt (54, 154) und dem ersten Seitenabschnitt (56, 156) angeordnet ist, und die erste Folienseitenfläche (42, 142) im Wesentlichen senkrecht zu einer Tangente des ersten Seitenabschnitts (56, 156) des Substrats (14, 114) ist.

## Revendications

1. Pièce moulée par injection (10, 110) pour un véhicule à moteur comprenant :
• une couche de film (12, 112) ayant une partie principale de film (32, 132) et une première partie latérale de film (34, 134) qui se termine en une première surface latérale de film (42, 142), dans laquelle la première partie latérale de film (34, 134) s'étend depuis la partie principale de film (32, 132) dans une direction différente d'un plan défini par la partie principale de film (32, 132), la couche de film (12, 112) ayant également une surface extérieure de film (18, 118) et une surface intérieure de film (20, 120) disposée à l'opposé de la surface extérieure de film (18, 118) ;
• une première couche de polymère (14, 114) en contact avec la surface intérieure de film (20, 120); et
• une deuxième couche de polymère (16) ou un revêtement (116) en contact avec la surface extérieure du film (18, 118), la première surface latérale du film (42, 142) et la première couche de polymère (14, 114); dans laquelle
• la deuxième couche de polymère (16) ou le revêtement (116) est un polymère transparent ; **caractérisé en ce que**
la première couche de polymère (14, 114) comprend une première surface latérale (64, 164) qui s'étend au-delà de la première surface latérale du film (42, 142) ; dans laquelle
une profondeur (d) de la couche de film (12, 112) mesurée depuis la première surface latérale du film (42, 142) jusqu'à un centre de la surface supérieure du film (18, 118) est inférieure à une profondeur (D) de la première couche de polymère (14, 114) mesurée depuis la première surface latérale (64, 164) jusqu'à un centre de la surface supérieure (50, 150); dans laquelle la couche de film (12, 112) comprend une seconde partie latérale de film (36, 136) s'étendant depuis la partie principale (32, 132) dans une direction différente du plan défini par la partie principale de film (32, 132), dans laquelle la seconde partie latérale de film (36, 136) se termine dans une seconde surface latérale de film (44, 144) et dans laquelle la couche de film (12, 112) et le premier polymère (14, 114) sont sensiblement de la même couleur.

2. Pièce moulée par injection (10, 110) selon la revendication 1, dans laquelle la première couche de polymère (14, 114) comprend une première région de transition (60, 160) disposée entre la partie principale (54, 154) et la première partie latérale (56, 156).

3. Pièce moulée par injection (10, 110) selon la revendication 3, dans laquelle la première région de transition (60, 160) a un profil arqué et la première surface latérale du film (42, 142) est disposée sensiblement à un point médian de la première région de transition (60, 160) de la première couche de polymère (14, 114).

4. Pièce moulée par injection (10, 110) de l'une quelconque des revendications précédentes, dans laquelle la couche de film (12, 112) est insérée dans la deuxième couche de polymère (16) ou le revêtement (116).

5. Pièce moulée par injection (10, 110) de l'une quelconque des revendications précédentes, dans laquelle la couche de film (12, 112) comprend un graphique imprimé (22) et une partie translucide (24).

6. Pièce moulée par injection (10, 110) selon la revendication 5, dans laquelle le graphique imprimé (22) est disposé au-dessus de la partie principale (54, 154) de la première couche de polymère (14, 114).

7. Pièce moulée par injection (10, 110) de l'une quelconque des revendications précédentes, dans laquelle la seconde couche de polymère (16) ou le revêtement (116) est en contact avec la première partie latérale (56, 156) de la première couche de polymère (14, 114).

8. Pièce moulée par injection (10, 110) de l'une quelconque des revendications précédentes, dans laquelle une surface supérieure (50, 150) de la première couche de polymère (14, 114) est de niveau avec la surface extérieure du film (18, 118).

9. Pièce moulée par injection (10, 110) selon la revendication 4, dans laquelle la première couche de polymère (14, 114) comprend une partie centrale (54, 154), une première partie latérale (56, 156), et une première partie incurvée (60, 160) disposée entre la partie centrale (54, 154) et la première partie latérale (56, 156), et la première surface latérale du film (42, 142) est sensiblement perpendiculaire à une tangente de la première partie latérale (56, 156) du substrat (14, 114).
